# EUROPEAN PATENT SPECIFICATION

(11) **EP 3 359 438 B1**
(45) Date of publication and mention of the grant of the patent: **04.12.2019**
(21) Application number: 16781185.0
(22) Date of filing: 07.10.2016
(51) Int. Cl.: G05G 1/04, B62D 1/184

(54) **A LEVER FOR A STEERING COLUMN ASSEMBLY**
HEBEL FÜR EINE LENKSÄULENANORDNUNG
LEVIER POUR ENSEMBLE DE COLONNE DE DIRECTION

(30) Priority: 08.10.2015 GB 201517828
(43) Date of publication of application: 15.08.2018
(73) Proprietor: TRW Limited, Solihull, West Midlands B90 4AX (GB)
(72) Inventor: KINGSTON-JONES, Harry, Steyning Sussex BN44 3GB (GB); DAVIES, Niclas, Birmingham West Midlands B75 6PQ (GB); HANDY, Colin, Coventry West Midlands CV5 9LD (GB); WEGRZYN, Piotr, 43-300 Bielsko-Biala (PL)
(74) Representative: Barker Brettell LLP
(86) International application number: PCT/GB2016/053130
(87) International publication number: WO 2017/060725

(56) References cited:
- EP-A1- 1 806 269
- DE-A1- 10 141 551
- DE-A1-102014 200 930
- GB-A- 2 464 490
- US-A1- 2009 188 343

## Description

This invention relates to improvements in levers for steering column assemblies, and to an adjustable steering column assembly including a locking lever.

It is known to provide a steering column assembly that can be adjusted for at least one of reach and rake. The steering column assembly typically comprises a shroud that supports a steering shaft. Where the assembly is adjustable for reach the shroud may comprise an upper part and a lower part, with the two being telescopically adjustable to allow the length of the shroud to be altered. The steering shaft, which may also be telescopically, extends along the shroud and is supported by one or more bearing assemblies. One end of the steering shaft connects to a steering wheel of the vehicle and the other to a steering rack or gearbox. The shroud is held in position by a clamp mechanism that secures the shroud to a support bracket which is in turn secured to a fixed part of the vehicle such as a cross-member located behind the dashboard.

The steering column assemblies are often manually adjustable and to achieve this the clamp mechanism may be connected to an operating lever that can be operated by a user to move the clamp mechanism between an unclamped condition in which at least a part of the shroud can be moved relative support bracket and a clamped condition in which the part of the shroud is fixed relative to the support bracket. The clamp mechanism typically includes a clamp pin or bolt that rotates around its axis during clamping and unclamping and the lever allows the driver to apply a sufficient turning moment the clamp pin or bolt.

The lever is usually a sturdy affair, with a root part that is rotatable about an axis and an end part extending away from the root and forming a handle that the user can grip. The longer the lever, the higher the torque that the user can apply for a given strength of user. The lever should be relatively rigid to give a high quality feel to the user, and also to ensure it is robust enough to withstand repeated use during the life of the vehicle that it is fitted to.

A problem with such an arrangement is that in locating the lever in a positon that is convenient to the driver when adjusting the position of the steering wheel from being seated in the driver's seat, and making it rigid to give a quality feel, it is also in a position where it could be impacted by the drivers legs in an accident. This could lead to the lever injuring the driver. A locking lever according to the preamble of claim 1 is known from document EP1806269 A1.

An object of the present invention is to ameliorate the problem of a driver being injured in the event of an impact with the lever during a collision of the vehicle.

According to a first aspect the invention provides a locking lever for a clamp mechanism of a steering column assembly comprising a first portion, a second portion that extends from the first portion, and a connecting portion or region between the first portion and the second portion about which the second portion may preferentially breakaway from the first portion in the event of an impact by an occupant of the vehicle on the second part, the lever further comprising a flexible tether that prevents the second portion fully separating from the first portion after the lever has broken about the connection portion or region.

The provision of the connecting portion or region that allows a second portion of the lever to breakaway from the rest of the lever reduces the risk of the driver being harmed by the lever. The tether in turn ensures that the broken away part of the lever does not fly off around the cabin of the vehicle which may potentially introduce a secondary risk of injury.

The connecting portion may comprise a weakened portion or region of the lever between the first and second portions about which the second portion of the lever will preferentially and repeatably break away from the first portion. The connecting portion should be relatively rigid prior to break away compared to the rigidity of the flexible tether after a breakaway.

The connecting portion or region may comprise a portion or region of known shear strength, being lower than the shear strength of the adjacent first and second portions of the lever. The shear strength should be chosen to ensure the lever does not break during normal adjustment but will break by an impact during a collision that exceeds the forces expected during normal adjustment.

The lever may comprise a, preferably plastic, component of unitary construction in which the first portion, second portion and connecting portion are all integral parts.

The plastic component may comprise an outer shell and a plurality of internal webs that provide rigidity to the shell. It may be an injection molded component or may be produced in any other known manufacturing process.

According to the invention the tether comprises a flexible strap that is integrally connected at one end to the first portion and integrally connected at the other to the second portion. Where the lever is a plastic component of unitary construction the strap may also be an integral part of the component. The strap, first part and second part may all be molded as one unitary component.

To optimise the flexibility of the strap it may only be connected to the first part and second part at the ends of the strap with no connection therebetween in the manner of a carry handle of a case.

As an alternative to the integral strap secured at its ends only, the tether may comprise a portion of material that has a higher elasticity that than the material that forms the first portion or second portion or connecting portion or zone, the portion of material being embedded wholly or partially within the lever such that part of the tether is embedded in the first portion and another part of the tether is embedded in the second portion.

The embedded flexible portion of material should be constructed and arranged to permit the second part of the lever to mover relatively freely relative to the first part when the second part has broken away. It should therefore be much more flexible that the connecting part when the connecting part has broken.

For example, to manufacture a lever a twin shot molding tool may be used. A suitable flexible material for the tether may be Santoprene(Rubber).

In another arrangement not forming part of the invention, the tether may comprise a wire or cord, such as metal wire, that may be secured in one region to the first part and secured in another region spaced along the wire to the second part. The wire may be overmolded with the first and second portions of the lever where the lever is a molded component.

In yet another arrangement not forming part of the invention, the tether may comprise a length of tape that is fixed to the first part at one end and to the second part at the other end. The tape may be wrapped around the lever. The tape may be provided with an adhesive backing along at least a part of its length so as to adhere the tape to the first portion and the second portion.

In another arrangement not forming part of the invention, the tether may comprise a resilient band that is hooked onto a first hook secured to, or integral to, the first part, and hooked onto a second hook secured to, or integral with, the second part, the loop being restrained such that it is cannot separate from the hooks. The band could comprise a rubber band, or other elastomeric material, and may include undersized holes that the hooks pass through.

Where the lever is a plastic component the hooks may be moulded into the first and second parts of the handle.

Where we refer to the tether being flexible, we may mean that it is able to bend relatively freely in one, or two, or all three possible orthogonal directions, and/or that it is able to rotate around one, or two or all three possible orthogonal axes.

The second portion may comprise a protruding handle portion of the lever, sized such that it can be grasped by an occupant of the vehicle to adjust the clamp mechanism. The first portion may comprise a root portion that is suitable for connecting to a clamp pin or bolt of a clamp mechanism, the handle being further from the axis of the clamp pin or bolt than the root portion. The clamp pin may pass through an opening in the first portion of the lever, the handle being rotatable about the axis of the clamp pin or bolt.

The first portion may comprise a plastic component that is overmolded onto a metal support, the metal support providing an anchor for fixing the lever to a clamp pin on a clamp mechanism of a steering column assembly.

According to a second aspect the invention provides a steering column assembly comprising a shroud that supports a steering column, a support bracket that in use is fixed in positon within a vehicle, and a clamp mechanism that secures the shroud to the support bracket, the clamp mechanism including a lever according to the first aspect of the invention.

The first portion of the lever and the connecting portion may be located inside of the shroud or a cover part of the steering assembly so that on break away occupant is isolated from the first part of the lever by the shroud or cover. The second part may be located outside of the shroud or cover where it can be grabbed by an occupant.

There will now be described, by way of example only, several embodiments of the present invention with reference to and as illustrated in the accompanying drawings of which:
**Figure 1** shows in cross section a representative steering column assembly that falls within the scope of the second aspect on the invention;
**Figure 2** is a representation of a first embodiment of a handle for the assembly of Figure 1
**Figure 3** is a sequence showing the breaking of the handle from (a) an unbroken, to (b) a part broken and (c) a broken away condition, illustrating how the tether prevents full separation of the parts of the lever;
**Figure 4** is a representation of a second embodiment of a handle for the assembly of Figure 1;
**Figure 5** is a representation of a third embodiment not forming part of the invention of a handle for the assembly of Figure 1;
**Figure 6** is a representation of a fourth embodiment not forming part of the invention of a handle for the assembly of Figure 1; and
**Figure 7** is a representation of a fifth embodiment not forming part of the invention of a handle for the assembly of Figure 1.

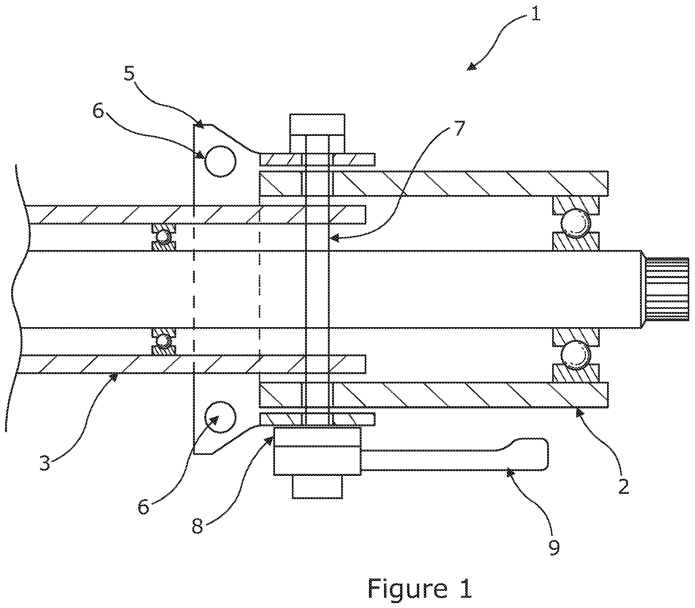

As shown in Figure 1, a steering column assembly 1 comprises a two part telescopic shroud 2, 3 that supports a two part telescopic steering shaft 4, a support bracket 5that in use is fixed in positon within a vehicle by bolts not shown that pass through openings 6 in the support bracket, and a clamp mechanism that secures the shroud to the support bracket. The clamp mechanism includes a clamp pin 7 that extends through an opening in the shroud and in the support bracket, and a cam mechanism 8 that is threaded onto the clamp pin 7. The cam mechanism is operable to clamp and unclamp depending arms of the support bracket onto the shroud 2, 3 by rotation of the clamp pin 7 around its axis. A user operable lever 9 is fixed to the clamp pin7 that can be grasped by an occupant and allows the occupant to operate the clamp mechanism by applying a torque to the clamp pin. The lever 9 is located to the side of the steering column assembly in easy reach of the driver when seated.

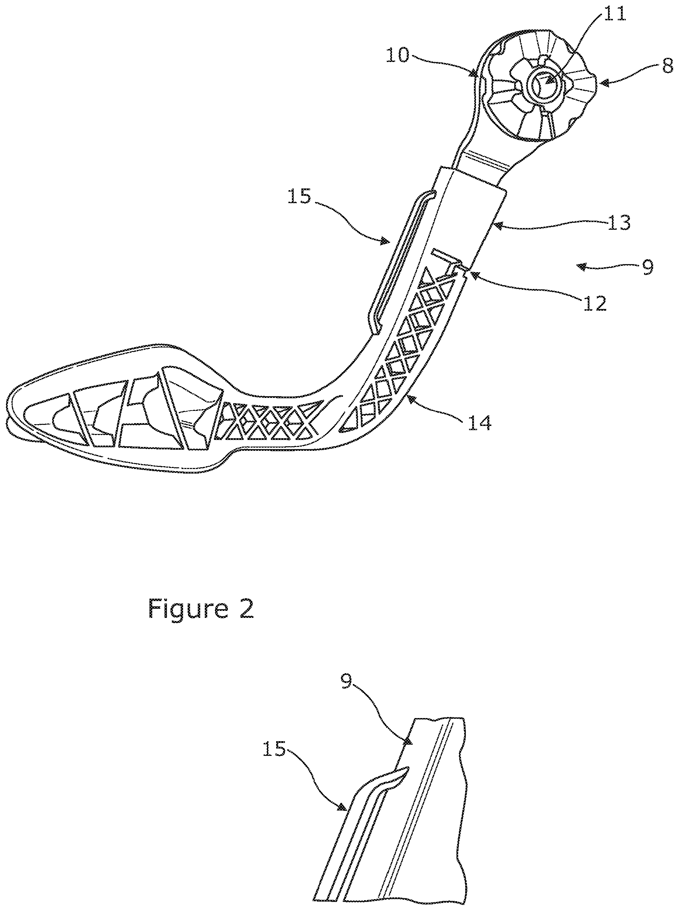

A first embodiment of a lever 9 is shown in Figure 2. The lever 9 comprises an elongate body of plastic which is overmolded at one end onto a metal fixing 10 designed to be secured to the clamp pin. The fixing is a metal plate with a central opening 11 that threads onto the clamp pin 7. As shown a part of the cam mechanism 8 is fixed onto this plate. The plastic body has an outer shell and a set of webs that provide support and give rigidity to the shell. In this example the body is bent at about a right angle approximately half way along its length. A notch 12 is provided in the shell at the outside of the bend, between 3 and 4mm deep. The notch defines a connecting region or zone between the terminal end of the lever that forms a handle and the end that is over moulded onto the metal connector. The lever in the language of this specification is therefore divided about the notch into a first part 13 (the end that is overmolded) and a second part 14 (the end that forms the handle).

The notch 12 defines a region of the lever 9 where it will fail when under an impact load, such as a driver's knee striking the handle part of the lever during a collision. The location of the notch 12 is chosen so that the location of the breakaway is outside of the knee zone of the driver.

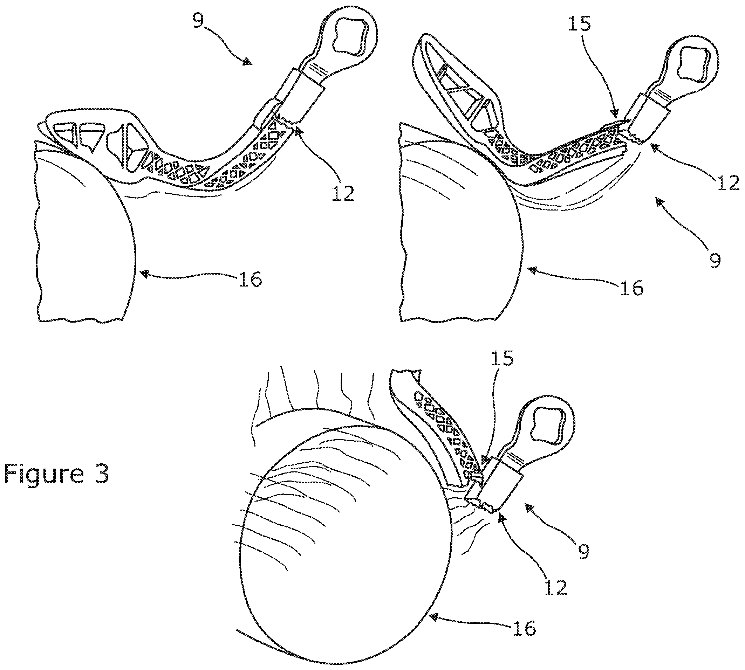

Connecting the first part 13 to the second part 14 is a tether in the form of a strap 15, which is an integrally formed part of the plastic lever. This can be seen clearly in Figure 3 of the drawings. This is an elongate thin portion of plastic that is connected to the lever only at its extreme ends. The strap is considerably more flexible than the remainder of the lever. The strap and lever together form a closed loop of arbitrary shape.

In use, as shown in the sequence of Figure 3, the strap 15 ensures that the handle part of the lever does not fully separate from the first part once a breakaway has occurred due to strike by an occupants knee 16 or similar, and yet it allows relatively free movement of the handle part so it has less risk of injuring the driver.

The strap could be provided on the opposite side of the lever to the notch, as shown, or in any other position. Indeed, the location at which the strap is tethered to the first portion and to the second portion of the lever, and the length and shape of the strap, may be chosen quite arbitrarily provided that the strap, once the lever has broken, performs the task of restraining the broken off portion.

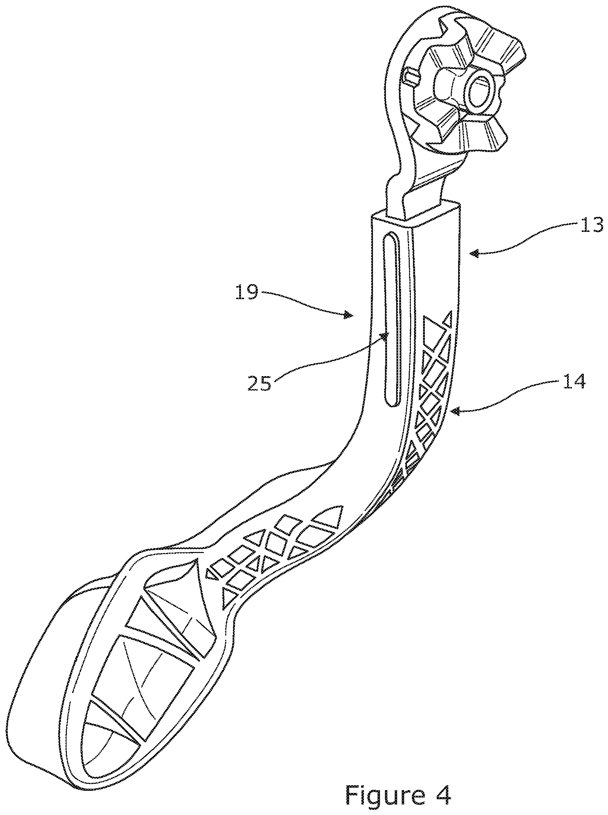

An alternative embodiment of a lever 19 is shown in Figure 4. In this embodiment, the parts which are common with the first embodiment are identified using like reference numerals, which is also the case for the following embodiments for clarity. A tether 25 comprises a secondary material that is more flexible than the plastic (or other material) of the first part 13 and second part of the lever 14, which is embedded into the lever. This can be achieved using a two shot moulding process. The second material may be rubber. Once the lever 19 has broken away, about the notch 12, the tether prevents the full separation of the handle part of the lever from the end connected to the clamp mechanism.

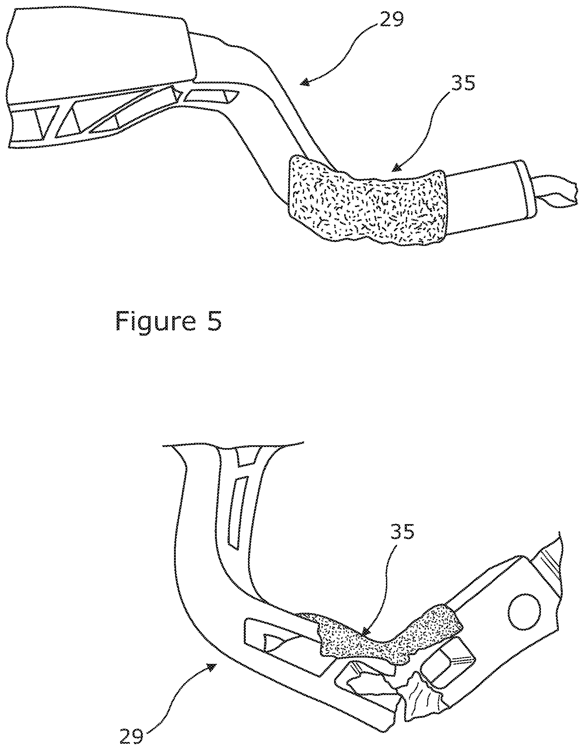

In another alternative embodiment of a lever 29 shown in Figure 5 not forming part of the invention, the tether comprises a length of tape that is wound around the lever to grip the first part and the second part. The tape 35 may comprise a fabric or plastic sheet material with an adhesive backing that ensures it does not separate from the lever 29. In a modification, the lever could be shrink wrapped using a thermo-shrinking tube of material that in a pre-shrunk state can be slid onto the lever and when heated will shrink onto and grip the first portion and second portion covering the area of expected breakage.

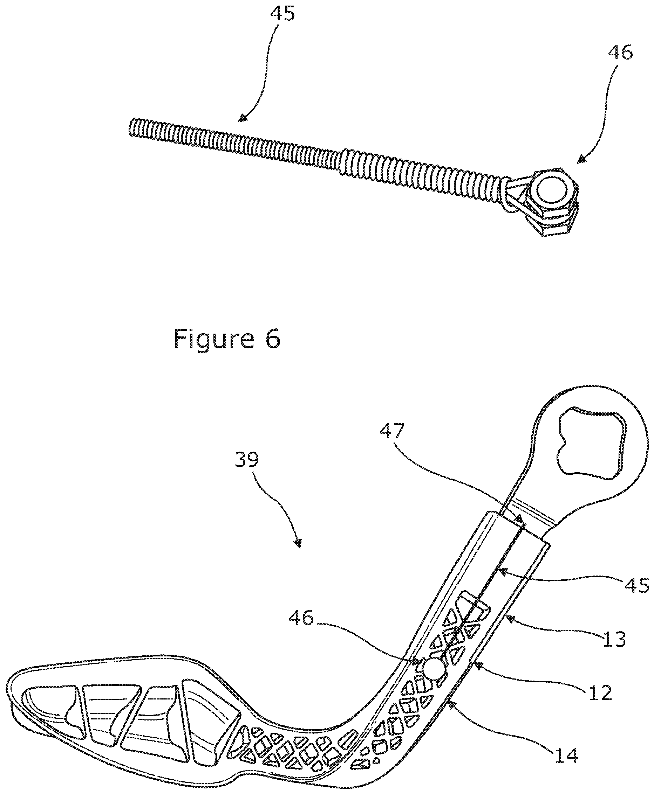

In a still further embodiment of a lever 39 shown in Figure 6 not forming part of the invention, the tether 45 comprises a flexible strand or rod, such as a metal wire that is embedded into the lever. As shown, one end of the wire 45 is welded by a spot weld 47 to the metal plate 10 and the other end is secured to a nut 46 that is captive in a recess in the handle part 14 of the lever. The wire may be a braided metal wire.

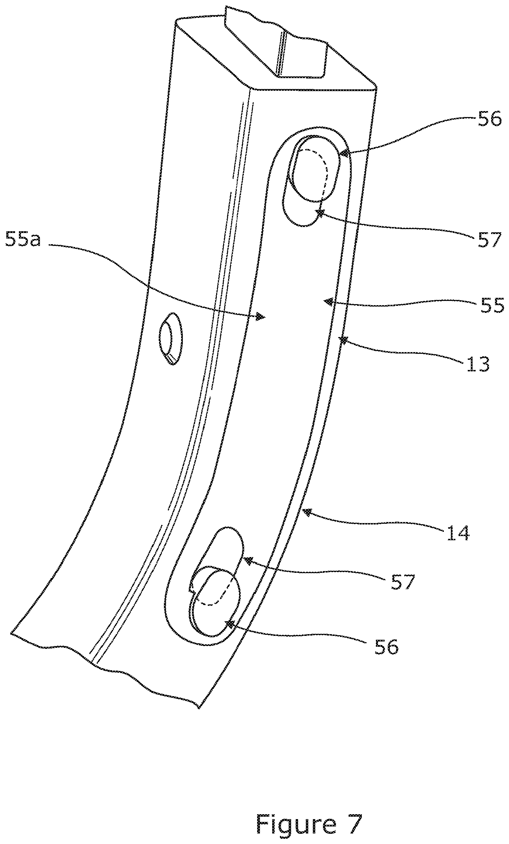

Finally in another embodiment of a lever 49 shown in Figure 7 not forming part of the invention, the tether 55 comprises a flexible strip 55a, for example of rubber material, that has two spaced apart openings 57, each one being pushed onto a hook 56 formed on the first part and second part respectively of the lever. The openings 57 are undersized so that the flexible strip grips onto the hooks. The hooks 56 are molded integrally with the first and second parts of the lever which are plastic material.

## Claims

1. A locking lever (9) for a clamp mechanism of a steering column assembly comprising a first portion (13), a second portion (14) that extends from the first portion, and a connecting portion or region located between the first portion to the second portion about which the second portion will preferentially breakaway from the first portion in the event of an impact by an occupant of the vehicle on the second portion, the lever further comprising a flexible tether (15) that prevents the second portion (14) fully separating from the first portion (13) after the lever has broken about the connection portion or region, **characterised in that** the tether comprises a flexible strap that is integrally connected at one end to the first portion (13) and integrally connected at the other end to the second portion (14).

2. A locking lever according to claim 1 in which the connecting portion comprises a weakened portion or region of the lever between the first and second portions about which the second portion of the lever will preferentially and repeatably break away from the first portion.

3. A locking lever according to claim 1 or claim 2 which comprises a component of unitary construction in which the first portion, second portion and connecting portions are all integral parts.

4. A locking lever according to any preceding claim in which the strap is only connected to the first part and second part at the ends of the strap with no connection therebetween.

5. A locking lever according to any preceding claim in which the second portion comprises a protruding handle portion of the lever, sized such that it can be grasped by an occupant of the vehicle to adjust the clamp mechanism.

6. A locking lever according to any preceding claim in which the first portion comprises a root portion that is suitable for connecting to a clamp pin or bolt of a clamp mechanism, the handle being further from the axis of the clamp pin or bolt than the root portion.

7. A steering column assembly comprising a shroud that supports a steering column, a support bracket that in use is fixed in positon within a vehicle, and a clamp mechanism that secures the shroud to the support bracket, the clamp mechanism including a lever according to any preceding claim.

## Patentansprüche

1. Feststellhebel (9) für einen Klemmmechanismus einer Lenksäulenanordnung, einen ersten Abschnitt (13), einen zweiten Abschnitt (14), der sich vom ersten Abschnitt erstreckt, und einen Verbindungsabschnitt oder -bereich, der sich zwischen dem ersten Abschnitt und dem zweiten Abschnitt befindet, um den der zweite Abschnitt im Falle eines Aufpralls durch einen Insassen des Fahrzeugs auf den zweiten Abschnitt vorzugsweise vom ersten Abschnitt wegbrechen wird, umfassend, wobei der Hebel ferner einen flexiblen Gurt (15) umfasst, der verhindert, dass sich der zweite Abschnitt (14) vollständig vom ersten Abschnitt (13) trennt, nachdem der Hebel um den Verbindungsabschnitt oder -bereich abgebrochen ist, **dadurch gekennzeichnet, dass** der Gurt ein flexibles Band umfasst, das an einem Ende mit dem ersten Abschnitt (13) einstückig verbunden ist und an dem anderen Ende mit dem zweiten Abschnitt (14) einstückig verbunden ist.

2. Feststellhebel nach Anspruch 1, wobei der Verbindungsabschnitt einen geschwächten Abschnitt oder Bereich des Hebels zwischen dem ersten und zweiten Abschnitt umfasst, um den der zweite Abschnitt des Hebels vorzugsweise und wiederholbar vom ersten Abschnitt wegbrechen wird.

3. Feststellhebel nach Anspruch 1 oder Anspruch 2, der eine einstückig gefertigte Komponente umfasst, wobei der erste Abschnitt, der zweite Abschnitt und die Verbindungsabschnitte alle einstückig sind.

4. Feststellhebel nach einem der vorstehenden Ansprüche, wobei das Band nur an den Enden des Bands mit dem ersten Teil und dem zweiten Teil verbunden ist und dazwischen nicht verbunden ist.

5. Feststellhebel nach einem der vorstehenden Ansprüche, wobei der zweite Abschnitt einen vorstehenden Griffabschnitt des Hebels umfasst, der so dimensioniert ist, dass er von einem Insassen des Fahrzeugs gegriffen werden kann, um den Klemmmechanismus einzustellen.

6. Feststellhebel nach einem der vorstehenden Ansprüche, wobei der erste Abschnitt einen Fußabschnitt umfasst, der dazu geeignet ist, mit einem Klemmstift oder -bolzen eines Klemmmechanismus verbunden zu werden, wobei der Griff von der Achse des Klemmstifts oder -bolzens weiter entfernt ist als der Fußabschnitt.

7. Lenksäulenanordnung, eine Verkleidung, die eine Lenksäule trägt, einen Haltebügel, der bei der Verwendung innerhalb eines Fahrzeugs fixiert ist, und einen Klemmmechanismus, der die Verkleidung am Haltebügel fixiert, umfasst, wobei der Klemmmechanismus einen Hebel nach einem der vorstehenden Ansprüche umfasst.

## Revendications

1. Levier de verrouillage (9) pour un mécanisme de serrage d'un ensemble de colonne de direction qui comprend une première partie (13), une deuxième partie (14) qui s'étend depuis la première partie, et une partie ou région de raccordement située entre la première partie et la deuxième partie autour de laquelle la deuxième partie se séparera de façon préférentielle de la première partie en cas d'impact par un occupant du véhicule sur la deuxième partie, le levier comprenant en outre une attache flexible (15) qui empêche la deuxième partie (14) de se séparer complètement de la première partie (13) une fois que le levier est rompu autour de la partie ou région de raccordement, **caractérisé en ce que** l'attache comprend une sangle flexible qui est reliée d'un seul tenant au niveau d'une extrémité à la première partie (13) et reliée d'un seul tenant au niveau de l'autre extrémité à la deuxième partie (14).

2. Levier de verrouillage selon la revendication 1, dans lequel la partie de raccordement comprend une partie ou région affaiblie du levier entre les première et deuxième parties, autour de laquelle la deuxième partie du levier se séparera de façon préférentielle et de manière répétée de la première partie.

3. Levier de verrouillage selon la revendication 1 ou la revendication 2, qui comprend un composant de construction unitaire dans lequel la première partie, la deuxième partie et les parties de raccordement sont toutes des parties intégrales.

4. Levier de verrouillage selon l'une quelconque des revendications précédentes dans lequel la sangle n'est reliée qu'à la première partie et à la deuxième partie aux extrémités de la sangle sans qu'il y ait de raccordement entre elles.

5. Levier de verrouillage selon l'une quelconque des revendications précédentes dans lequel la deuxième partie comprend une partie de poignée faisant saillie du levier, dimensionnée de manière à pouvoir être saisie par un occupant du véhicule pour régler le mécanisme de serrage.

6. Levier de verrouillage selon l'une quelconque des revendications précédentes dans lequel la première partie comprend une partie de base qui est appropriée pour être reliée à une broche ou à un boulon de serrage d'un mécanisme de serrage, la poignée étant plus éloignée de l'axe de la broche ou du boulon de serrage que la partie de base.

7. Ensemble de colonne de direction comprenant un carénage qui supporte une colonne de direction, une patte de support qui, en utilisation, est fixée en position dans un véhicule, et un mécanisme de serrage qui fixe le carénage à la patte de support, le mécanisme de serrage comprenant un levier selon l'une quelconque des revendications précédentes.
